# EUROPÄISCHE PATENTSCHRIFT

(11) **EP 1 006 031 B1**
(45) Veröffentlichungstag und Bekanntmachung des Hinweises auf die Patenterteilung: **02.08.2006**
(21) Anmeldenummer: 99123176.2
(22) Anmeldetag: 23.11.1999
(51) Int. Cl.: B60S 1/52

(54) **Heizung für ein zu erwärmendes Bauteil eines Kraftfahrzeuges**
Heater for a component to be heated in a vehicle
Chauffage pour un élément à chauffer d'un véhicule

(30) Priorität: 01.12.1998 DE 19855388
(43) Veröffentlichungstag der Anmeldung: 07.06.2000
(73) Patentinhaber: SIEMENS AKTIENGESELLSCHAFT, 80333 München (DE)
(72) Erfinder: Rehs, Andreas, 36199 Rotenburg (DE)

(56) Entgegenhaltungen:
- EP-A- 0 123 103
- DE-A- 2 519 902
- DE-A- 19 807 594
- US-A- 4 212 425

## Beschreibung

Die Erfindung betrifft eine Heizung für ein zu erwärmendes Bauteil eines Kraftfahrzeuges, insbesondere für ein Ventil oder eine Waschdüse einer Scheibenreinigungsanlage mit einem elektrischen Heizelement, das in einem Heizschacht des Bauteils angeordnet ist, wobei das Heizelement innerhalb einer einen unmittelbaren Kontakt des Heizelements mit dem zu erwärmenden Bauteil vermeidenden Aufnahme der Heizung angeordnet ist und mit der Aufnahme eine vormontierbare bauliche Einheit bildet.

Solche Heizungen dienen dazu, das entsprechende Bauteil auf eine Temperatur oberhalb 0°C zu halten und sind aus der Präxis bekannt. Hierbei wird das Heizelement meist unmittelbar an der Waschdüse oder dem Ventil der Scheibenreinigungsanlage befestigt. Die Befestigung erfolgt meist dadurch, dass das Heizelement in eine Aussparung des Bauteils eingesetzt wird. Anschließend werden das zu erwärmende Bauteil und das Heizelement miteinander vergossen. Hierfür ist es erforderlich, für jedes der Bauteile Aufnahmevorrichtungen zu gestalten und das Heizelement entsprechend anzupassen. Das Heizelement ist wahlweise als Widerstandselement oder als PTC-Element gestaltet. Die Gestaltung des Heizelementes als PTC-Element hat den Vorteil, dass sich dessen Heizleistung mit fallender Temperatur steigert. Dies ermöglicht eine besonders einfache Steuerung der Heizung.

Nachteilig bei der bekannten Heizung ist, dass sich die Befestigung des Heizelements an dem zu heizenden Bauteil sehr aufwendig gestaltet. Weiterhin wird das zu erwärmende Bauteil durch das Heizelement in nur einem sehr kleinen Bereich beheizt. Hierfür ist eine hohe Temperatur und damit eine kostenintensive temperaturfeste Gestaltung der Bauteile erforderlich.

Aus der EP-A-0 123 103 und der DE-A-25 19 902 ist eine beheizte Spritzdüse für eine Scheibenwaschanlage bekannt, bei der das zu erwärmende Gehäuse der Spritzdüse eine Aussparung besitzt, in die ein mit einem wärmeleitenden Formstoff umgossener Kaltleiter bzw. eine Schaltung mit einem temperaturabhängigen Widerstand eingeführt und in einen hochgefüllten, flammfesten, hydrolysebeständigen und wärmeleitenden Formstoff bzw. ein Kunstharz eingebettet ist.

Aus der DE-A-198 07 594 ist eine beheizte Spritzdüse für eine Scheibenwaschanlage bekannt, bei der das zu erwärmende Gehäuse der Spritzdüse eine Aussparung besitzt, in die ein PTC-Heizelement eingeführt ist. Dieses PTC-Heizelement liegt über eine seiner Kontaktanschlüsse unmittelbar an einer Wand der Aussparung an.

Der Erfindung liegt das Problem zugrunde, eine Heizung der eingangs genannten Art so zu gestalten, dass sie sehr einfach zu montieren ist und zur Beheizung verschiedenster Bauteile geeignet ist.

Dieses Problem wird erfindungsgemäß dadurch gelöst, dass die zylinderförmig gestaltete Aufnahme zur Befestigung an dem Bauteil in einen entsprechend gestalteten Heizschacht des Bauteils eingesetzt und in der dem Heizschacht durch Festklemmen, Festkleben oder Verklipsung gesichert ist.

Durch diese Gestaltung bildet das Heizelement mit der Aufnahme eine vormontierbare bauliche Einheit, die unabhängig von dem Bauteil hergestellt und geprüft werden kann. Durch die Anordnung des Heizelementes innerhalb der Aufnahme wird ein unmittelbarer Kontakt des Heizelementes mit dem zu erwärmenden Bauteil vermieden. Da die erfindungsgemäße Heizung mit einer großen Wärmeübergangsfläche versehen ist, ist eine Beschädigung des zu erwärmenden Bauteils, bedingt durch lokale Überhitzung, ausgeschlossen. Die erfindungsgemäße Heizung eignet sich daher zur Beheizung unterschiedlichster und weniger temperaturfester Bauteile. Daher ist es dank der Erfindung nicht erforderlich, dass das Heizelement für jedes der Bauteile angepasst wird. Die zu erwärmenden Bauteile können beispielsweise Ventile und Waschdüsen oder auch ein Türschloss des Kraftfahrzeuges sein. Wenn für das entsprechende Bauteil eine besonders hohe Heizleistung erforderlich ist, lassen sich auch mehrere erfindungsgemäße Heizungen an dem Bauteil befestigen. Weiterhin vereinfacht sich die Montage der erfindungsgemäßen Heizung, da ihr Vergießen mit dem Bauteil nicht notwendig ist. Die Aufnahme der erfindungsgemäßen Heizung lässt sich einfach in den entsprechend gestalteten Heizschacht des zu erwärmenden Bauteils einsetzen und festklemmen, festkleben oder durch eine Verklipsung sichern.

Durch die entsprechend zylinderförmig gestaltete Aufnahme wird nahezu die gesamte von dem Heizelement abgegebene Heizleistung dem Bauteil zugeführt.

Vorteilhafterweise ist das Heizelement ein Widerstands- oder PTC-Element.

Die erfindungsgemäße Heizung lässt sich besonders kostengünstig fertigen, wenn das Heizelement mittels einer Vergussmasse in der Aufnahme gehalten ist. Hierdurch lässt sich die Fertigung zudem automatisieren.

Die Aufnahme wird gemäß einer anderen vorteilhaften Weiterbildung der Erfindung besonders gleichmäßig erwärmt, wenn die Aufnahme aus Metall gefertigt ist. Wegen der hohen Wärmeleitfähigkeit und der Wärmekapazität des Metalls gelangt die Heizleistung besonders gleichmäßig zu dem zu erwärmenden Bauteil. Weiterhin wird hierdurch die Montage des Heizelementes in der Aufnahme besonders einfach gestaltet.

Die Aufnahme hat gemäß einer anderen vorteilhaften Weiterbildung der Erfindung eine besonders hohe Wärmeleitfähigkeit und lässt sich besonders kostengünstig im Tiefziehverfahren fertigen, wenn die Aufnahme aus Aluminium gefertigt ist.

Die erfindungsgemäße Heizung gestaltet sich besonders kostengünstig, wenn die Aufnahme aus Kunststoff gefertigt ist. Im einfachsten Fall besteht die Aufnahme aus Vergussmasse.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: eine Waschdüse einer Scheibenreinigungsanlage mit einer erfindungsgemäßen Heizung,
- Fig.2: die erfindungsgemäße Heizung aus Figur 1 im Längsschnitt,
- Fig.3: eine weitere Ausführungsform der erfindungsgemäßen Heizung im Längsschnitt.

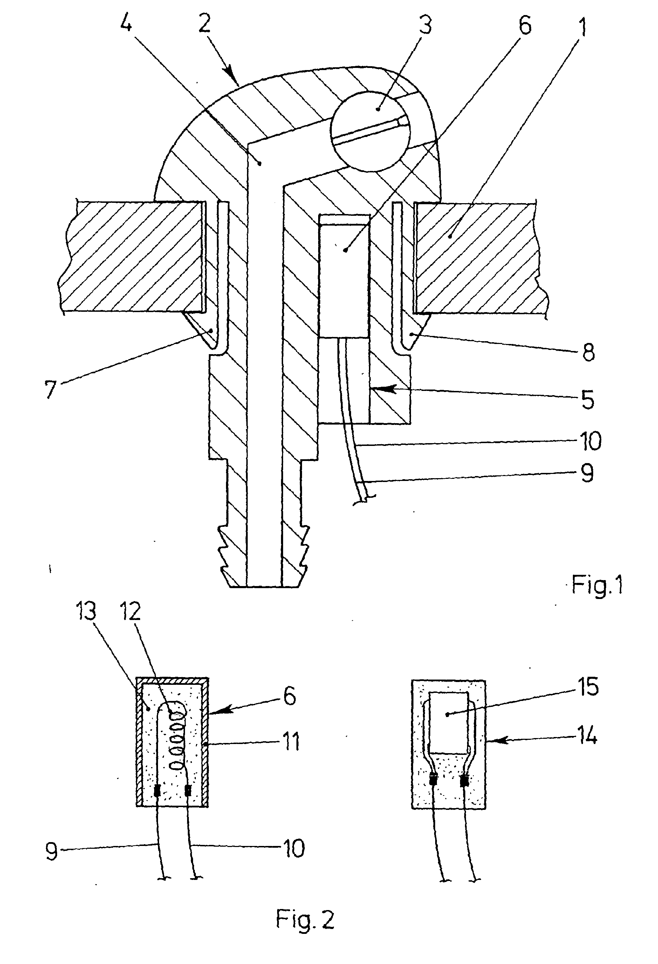

Die Figur 1 zeigt eine an einem Karosserieteil 1 eines Kraftfahrzeuges befestigte Waschdüse 2 mit einem einen Düsenkörper 3 aufweisenden Waschflüssigkeitskanal 4. Neben dem Waschflüssigkeitskanal 4 hat die Waschdüse 2 einen Heizschacht 5, in dem eine erfindungsgemäße Heizung 6 eingesetzt ist. Die Befestigung der Heizung 6 in dem Heizschacht 5 kann beispielsweise über ein Einpressen, Verkleben und/oder Verklipsen erfolgen. Die Waschdüse 2 ist mit dem Karosserieteil 1 verklipst. Hierfür hat die Waschdüse 2 federnde Rasthaken 7, 8. Die Heizung 6 ist über zwei elektrische Anschlußleitungen 9, 10 mit einer nicht dargestellten Steuereinrichtung verbunden.

Die Figur 2 zeigt die erfindungsgemäße Heizung 6 aus Figur 1 in einem Längsschnitt. Die Heizung 6 hat eine topfförmige Aufnahme 11 mit einer zylinderförmigen Mantelfläche. In der Aufnahme 11 ist ein Heizelement 12 mittels einer Vergußmasse 13 befestigt. Die Aufnahme 11 kann hierbei aus Kunststoff oder Aluminium gefertigt sein. Bei der aus Aluminium gefertigten Aufnahme 11 wird das Heizelement 12 durch die Vergußmasse 13 isoliert. Das Heizelement 12 ist als Widerstandselement ausgebildet und erwärmt sich in Abhängigkeit von der ihm zugeführten Energie.

Die Figur 3 zeigt eine weitere Ausführungsform der erfindungsgemäßen Heizung, bei der eine zylinderförmige Aufnahme 14 aus Kunststoff gefertigt ist. Im oberen Teil der Aufnahme 14 ist ein als PTC-Element ausgebildetes Heizelement 15 angeordnet. Diese Gestaltung der erfindungsgemäßen Heizung hat den Vorteil, daß die Fertigung der Aufnahme 14 und die Fixierung des Heizelementes 15 in einem Arbeitsgang erfolgen kann.

## Patentansprüche

1. Heizung für ein zu erwärmendes Bauteil eines Kraftfahrzeuges, insbesondere für ein Ventil oder eine Waschdüse einer Scheibenreinigungsanlage mit einem elektrischen Heizelement, das in einem Heizschacht des Bauteils angeordnet ist, wobei das Heizelement innerhalb einer einen unmittelbaren Kontakt des Heizelements mit dem zu erwärmenden Bauteil vermeidenden Aufnahme der Heizung angeordnet ist und mit der Aufnahme eine vormontierbare bauliche Einheit bildet, **dadurch gekennzeichnet, dass** die zylinderförmig gestaltete Aufnahme (11, 14) zur Befestigung an dem Bauteil (Waschdüse 2) in einen entsprechend gestalteten Heizschacht (5) des Bauteils eingesetzt und in der dem Heizschacht (5) durch Festklemmen, Festkleben oder Verklipsung gesichert ist.

2. Heizung nach Anspruch 1, **dadurch gekennzeichnet, dass** das Heizelement (12) mittels einer Vergussmasse (13) in der Aufnahme (11) gehalten ist.

3. Heizung nach zumindest einem der vorhergehenden Ansprüche, **dadurch gekennzeichnet, dass** die Aufnahme (11) aus Metall gefertigt ist.

4. Heizung nach Anspruch 3, **dadurch gekennzeichnet, dass** die Aufnahme (11) aus Aluminium gefertigt ist.

5. Heizung nach zumindest einem der Ansprüche 1 und 2, **dadurch gekennzeichnet, dass** die Aufnahme (11, 14) aus Kunststoff gefertigt ist.

6. Heizung nach mindestens einem der vorhergehenden Ansprüche, **dadurch gekennzeichnet, dass** das Heizelement (12) ein PTC- oder ein Widerstandselement ist.

## Claims

1. Heating facility for a motor vehicle component to be heated, in particular for a valve or a washing nozzle of a screen cleaning system having an electric heating element, which is arranged in a heating well of the component, the heating element being arranged within a heating facility receptacle avoiding direct contact of the heating element with the component to be heated, and the heating element forming with the receptacle a premountable structural unit, **characterized in that**, for fastening to the component (washing nozzle 2), the cylindrically configured receptacle (11, 14) is inserted into a correspondingly configured heating well (5) of the component and is secured in the heating well (5) by clamping, adhesive bonding or snapping.

2. Heating facility according to Claim 1, **characterized in that** the heating element (12) is held in the receptacle (11) by means of a sealing compound (13).

3. Heating facility according to at least one of the preceding claims, **characterized in that** the receptacle (11) is manufactured from metal.

4. Heating facility according to Claim 3, **characterized in that** the receptacle (11) is manufactured from aluminium.

5. Heating facility according to at least one of Claims 1 and 2, **characterized in that** the receptacle (11, 14) is manufactured from plastic.

6. Heating facility according to at least one of the preceding claims, **characterized in that** the heating element (12) is a PTC or resistance element.

## Revendications

1. Chauffage pour chauffer un composant d'un véhicule automobile, notamment une vanne ou un gicleur de lavage d'un système de lavage de glaces, comportant un élément de chauffage électrique qui est installé dans un puits de chauffage du composant, où l'élément de chauffage est mis en place dans un logement du chauffage évitant un contact direct entre l'élément de chauffage et le composant à chauffer et forme, avec le logement, un module constructif préassemblé, **caractérisé par le fait que** le logement (11, 14) en forme de cylindre est inséré, pour être fixé au composant (gicleur de lavage 2), dans un puits de chauffage (5), conçu d'une façon appropriée, du composant et est bloqué dans le puits de chauffage (5) en le coinçant, en le collant ou en l'encliquetant.

2. Chauffage selon la revendication 1, **caractérisé par le fait que** l'élément de chauffage (12) est maintenu dans le logement (11) par une masse de coulage (13).

3. Chauffage selon au moins l'une des revendications précédentes, **caractérisé par le fait que** le logement (11) est fabriqué en métal.

4. Chauffage selon la revendication 3, **caractérisé par le fait que** le logement (11) est fabriqué en aluminium.

5. Chauffage selon au moins l'une des revendications 1 et 2, **caractérisé par le fait que** le logement (11, 14) est fabriqué en matière plastique.

6. Chauffage selon au moins l'une des revendications précédentes, **caractérisé par le fait que** l'élément de chauffage (12) est un élément à coefficient de température positif ou un élément ohmique.
